# EUROPEAN PATENT SPECIFICATION

(11) **EP 3 328 210 B1**
(45) Date of publication and mention of the grant of the patent: **22.04.2020**
(21) Application number: 16763087.0
(22) Date of filing: 28.07.2016
(51) Int. Cl.: A23K 20/147, A23K 10/20, A23K 50/75

(54) **FEED FOR POULTRY AND METHOD OF PREPARATION THEREOF**
FUTTER FÜR GEFLÜGEL UND VERFAHREN ZUR HERSTELLUNG DESSELBEN
ALIMENTS POUR VOLAILLE ET SON PROCÉDÉ DE PRODUCTION

(30) Priority: 29.07.2015 PL 41327815
(43) Date of publication of application: 06.06.2018
(73) Proprietor: Hipromine S.A., 62-023 Robakowo (PL)
(72) Inventor: JÓZEFIAK, Damian, 60-479 Poznan (PL); MAZURKIEWICZ, Jan, 60-080 Sady (PL); URBANSKI, Jakub, 04-311 Warszawa (PL)
(74) Representative: Grzelak, Anna
(86) International application number: PCT/IB2016/054518
(87) International publication number: WO 2017/017635

(56) References cited:
- DATABASE WPI Week 201266 18 July 2012 (2012-07-18) Thomson Scientific, London, GB; AN 2012-M65296 XP002763125, -& CN 102 578 390 A (LANG Y) 18 July 2012 (2012-07-18)
- DATABASE WPI Week 201408 2 October 2013 (2013-10-02) Thomson Scientific, London, GB; AN 2013-W91457 XP002763126, -& CN 103 330 063 A (HOSHAN YUANWEIYUAN AGRIC & FORESTRY SCI) 2 October 2013 (2013-10-02)
- DATABASE BIOSIS [Online] BIOSCIENCES INFORMATION SERVICE, PHILADELPHIA, PA, US; August 2006 (2006-08), VALAVAN S EZHIL ET AL: "Effects of supplementation of chitin and probiotic on the performance of commercial layers", XP002763127, Database accession no. PREV200700162669 & VALAVAN S EZHIL ET AL: "Effects of supplementation of chitin and probiotic on the performance of commercial layers", INDIAN JOURNAL OF POULTRY SCIENCE, vol. 41, no. 2, August 2006 (2006-08), pages 183-186, ISSN: 0019-5529
- DATABASE WPI Week 201552 25 March 2015 (2015-03-25) Thomson Scientific, London, GB; AN 2015-29050M XP002763128, -& CN 104 431 434 A (CHENG S) 25 March 2015 (2015-03-25)

## Description

### TECHNICAL FIELD

The invention relates to a feed additive, use thereof for feeding poultry, for supporting maintenance of intestinal microflora of poultry and/or for maintaining a proper condition of digestive system of poultry and for preventing development of harmful bacteria, particularly *Enterobacteriaceae* in digestive system of poultry, as well as to a method of feeding poultry.

### BACKGROUND ART

The growing world population and the simultaneous reduction in areas suitable for agricultural production are huge civilization challenges. The need to meet the deficit of feed protein, an essential component in poultry nutrition, prompts to seek for alternative sources therefor.

Industrial production of poultry is a remarkably dynamically developing branch of the agricultural sector. Poultry has very high nutritional value, is relatively cheap and no religious barriers relate to its consumption. In addition, compared to other animals, poultry production is considered to be relatively environmentally friendly and is associated with a significantly lower CO₂ emissions. Intensification of poultry production requires increased amounts of protein to cover birds' needs for amino acids.

In the currently available sources of plant protein in feed for poultry, there are products extracted from soybeans, rape, legumes, corn and gluten. However, amino acid composition of vegetable protein is not optimal for poultry, as their natural food consists not only of plants, but also animals, mostly small invertebrates. Small invertebrates, including insects represent a significant part of the diet of precocials birds represented by orders *Galliformes* and *Anseriformes.* Evolutionary adaptation to food intake in the form of insects is indicated by the presence of enzymes from the class of chitinases in the digestive tract of birds.

Therefore, in animal nutrition fish meal is still being used, whereas due to over-fishing, this feed resources are strongly limited, and yet another factor increasing the cost of raw materials being the need to transport on huge distances.

For several years a possible use of insect-derived proteins has been suggested e.g. in feeding of livestock, although paucity of information regarding the repeateable and efficient production of such proteins, relevant species of insects and their stages of development are still considered to be a problem (Food and Agriculture Organization of the United Nations in 2012 Assessing the potential of insects as food and feed in assuring food security. Summary report. Technical consultation meeting January 23-25, FAO, Rome, Italy).

The publication by Zuidhof, M.J., Molnar, C.L., Morley, F.M., Wray, T.L., Robinson, F.E., Khan, B.A., Al-Ani, L., Goonewardene, L.A., 2003 Nutritive value of house fly (Musca domestica) larvae as a feed supplement for turkey poults. Animal Feed Science and Technology, 105, 225-230, describes promising results of research on feeding turkeys with dried housefly larvae.

In the review by Makkar H.P.S., Tran G., Heuze V., Ankers P. (2014) State-of-the-art on use of insects as animal feed. Animal Feed Science and Technology, 197, 1-33, results obtained so far in worldwide attempts to use different insects species in animal nutrition are decribed, pointing to a huge potential of this group of organisms as a raw material for direct feeding or for processing into high-quality protein components.

A theoretical analysis of the potential usefulness of various commercially available insects for use in production of feed has also been published recently (Sánchez-Muros, M.-J., Barroso, FG, Manzano-agugliaro (2014) Insect meal as renewable source of food for animal feeding: a review. Journal of Cleaner Production 65: 16-27). Still, there is lack of sufficient data regarding, among others, safety of such additives for livestock and their impact on meat production.

Chineese patent applications No. CN104472935, CN10428638, CN103583895, CN104431434 and CN102823720 disclose feed for poultry containing from several to several tens percent by weight of insect flour.

The chineese patent application No. CN102578390 describes an additive for animal feed comprising 20 - 50 parts of a mix, the mix comprising a combination of proteins of several insect species and an antibacterial peptide of insect origin isolated from chitin. Preparation of said feed additive is relatively time consuming due to the use of a defatted extract, which undergoes advanced chemical and physical treatment. Moreover, obtaining an extract for use in the feed additive requires expensive methods like CO₂ extraction.

The aim of the invention is to overcome the indicated disadvantages of the prior art. This object is achieved by providing a feed additive for poultry, which supports weight gain of poultry and maintenance of normal intestinal microflora and includes a high-fat flour derived from insects and/or protein-chitin extracts of insect origin.

The present inventors have surprisingly found that it is preferable to use an insect protein (locally produced on the basis of cheap vegetable raw materials) in diet of poultry. Both chickens and other poultry (for example, turkeys, guinea fowls, ducks, geese, pheasants, quails, partridges) in the wild eat insects at all stages of life, their digestive system is adapted to digestion of insects, as evidenced by the presence of chitinases, enzymes responsible for digestion of chitin - the basic building block of exoskeleton of insects. Therefore, the invention comprises incorporating of insect proteins as a raw material for use in commercial production of feed which does not only provide a protein-rich feed or replace fish meal but at the same time it supports weight gain of poultry and maintenance of normal intestinal microflora.

### DISCLOSURE OF THE INVENTION

Innovative research conducted by the inventors has shown that insect flour can replace fish meal and other protein sources including extraction meal, in animal feed, particularly poultry, especially broiler chickens and laying hens, and it was also surprisingly found that the addition of insect flour to feed for poultry, in particular chickens, accelerates their growth and improves the intestinal microflora, which may be beneficial in reducing mortality of poultry in production conditions, wherein frequently nutrient stress occurs. Improving the state of intestinal microflora has additional significance in the case of laying hens, by raising the level of egg hygiene, in particular through the impact on the reduction of infections with bacteria of the family *Enterobacteriaceae,* particularly with *Salmonella* bacteria.

Thus, the object of the invention is a feed additive for poultry, supporting weight gain of poultry and maintenance of normal intestinal microflora, which includes a high-fat flour derived from insects in an amount providing about 0.05 - 0.2%, preferably 0.1 - 0.2% by weight of insect flour per total weight of the feed. The insects are selected from Turkestan cockroach Shellfordella lateralis, hermetia larvae Hermetia illucens, short-winged cricket Gryllodes sigillatus and/or brown cricket Cryllus assimilis, preferably the insect is Turkestan cockroach Shellfordella lateralis.

It has not beed disclosed yet in prior art that insect flours, including high-fat flours which do not undergo advanced treatment, preferably yet not excusively derived from Turkestan cockroach *Shellfordella lateralis,* in an amount as small as from 0.05 to 0.2% by weight stimulate chicken growth simultaneously reducing the number of bacteria of the family *Enterobacteriaceae.* This effect is also present while using flours from other insect species. The growth effects observed by the Inventors in large-scale production can have a significant impact on an increase in breeding efficiency and raising its economic efficiency. It was further found that even the small addition of insect flours causes beneficial morphological changes in small intestine and duodendum indicating an alleviation of digestive system inflammations.

The term " feed additive" or "complementary feed mix" or "feed supplement" within the meaning of the invention means additive for feed for poultry, including broiler chickens, laying hens, turkeys, guinea fowls, quails, partridges, pheasants and other representatives of the order *Galliformes* and ducks and geese and other representatives of the orders *Anseriformes,* which is used to supplement the feed mix fed to those animals.

The feed additive according to the invention may also contain conventional excipients, including stabilizers, preservatives and the like.

The insects from which the high-fat flour are obtained are selected from the group comprising a Turkestan cockroach *Shellfordella lateralis,* hermetia larvae *Hermetia illucens,* short-winged crickets *Gryllodes sigillatus* and/or brown crickets *Gryllus assimilis.* Particularly preferred is the Turkestan cockroach.

In the embodiment, the poultry is selected from broiler chickens, laying hens, turkeys, guinea fowls, quails, partridges, pheasants and other representatives of the order *Galliformes* and ducks and geese, and other representatives of the order *Anseriformes.*

The present invention also relates to a method of supporting weight gain of poultry by feeding poultry, wherein 0.05 - 2%, most preferably is added 0.1 - 2% by weight of the total weight of the feed, particularly preferably 0.05 - 0.2%, preferably 0.1 - 0.2% by weight of insect flour per total weight of the feed is added, wherein the insects are selected from Turkestan cockroach *Shellfordella lateralis,* hermetia larvae *Hermetia illucens,* short-winged cricket *Gryllodes sigillatus* and/or brown cricket *Cryllus assimilis,* preferably the insect is Turkestan cockroach *Shellfordella lateralis.*

The Inventors have surprisingly found that even a small addition of insect flour to poultry feed results in higher body weight gain of the animals. Without wishing to be bound by theory, the inventors assume that the reason for this positive effect is the presence of insect chitin and chitin derivatives and/or proteins with antibacterial properties (AMP-anitimicrobial peptides) the so-called insect defensins in the insect flour. The addition of insect flour can be used as a substitute, partial or total, of fish meal and post-extraction pellets. This is particularly important as the resources of such a feed raw material as fish meal are strongly limited, often requiring transportation over long distances.

Over the last two decades the dynamically growing demand for fish meal and other sources of protein, with the simultaneous ban on the use of protein derived from birds and mammals has led to a sharp increase in prices of meal and to the intensification of fishing, leading to unstability of wild fish populations and overfishing. It is estimated that on a global scale even more than 60% of the fish catches are dedicated for animal feed. Countries such as Peru and Chile, which are the main suppliers of fishmeal, have limited fishing quotas in recent years. Due to the need of using shoals located in depths of the sea the costs of fishing and fish transport are rising, which together with the limited supply leads to a further price increase.

The possibility to replace fish meal is therefore a great advantage of insect flour, particularly in the rearing of poultry such as turkeys that particularly require addition of animal protein in feed.

The feed additive of the invention and the method of feeding of the invention allow therefore to overcome the drawbacks of the prior art by providing an agent not only being a replacement for fish meal, but also exerting in small quantities a beneficial effect on weight gain of poultry and intestinal microflora thereof.

Furthermore, use of the feed additive of the invention and/or feeding of poultry with the method according to the invention also has an unexpected advantage that the addition of insect flour to poultry feeds results in a better maintenance of proper intestinal microflora as insect flour, in particular obtained from a Turkestan cockroach have bacteriostatic action, in particular by inhibiting the growth and development of bacteria of the family *Enterobacteriaceae.*

Furthermore, use of the the feed additive according to the invention and/or feeding poultry by the method according to the invention have the unexpected advantage that the addition of insect flour to poultry feed results in better maintenance of the proper histomorphology of digestive tract, as insect flour in particular obtained from a Turkestan cockroach have a stimulating effect on integrity of gastrointestinal tract, especially small intestine and duodenum.

The insects, which are a source of high-fat flour are selected from Turkestan cockroach *Shellfordella lateralis,* hermetia larvae *Hermetia illucens,* short-winged cricket *Gryllodes sigillatus* and/or brown cricket *Gryllus assimilis.* Particularly preferred is a Turkestan cockroach.

In the embodiment, the poultry is selected from broiler chickens, laying hens, turkeys, guinea fowls, quails, partridges, pheasants and other representatives of the order *Galliformes* and ducks and geese, and other representatives of the order *Anseriformes.*

Disclosed herein is the use of the feed additive according to the invention in feeding poultry. The poultry is preferably selected from broiler chickens, laying hens, turkeys, guinea fowls, quails, partridges, pheasants and other representatives of the order *Galliformes* and ducks and geese, and other representatives of the order *Anseriformes.*

The addition of the feed additive according to the invention is done in amounts of 0.05 - 0.2%, preferably 0.1 - 0.2% by weight of insect flour per total weight of the feed.

The present invention as defined in the appended claims also relates to the use of the feed additive according to the invention to support maintenance of normal intestinal microflora of poultry and/or to maintain a proper condition of gastrointestinal tract of poultry and histomorphology of gastrointestinal tract of poultry, especially the small intestine and duodenum.

The addition of the feed additive according to the invention in the above use is in amounts of 0.05 - 0.2%, preferably 0.1 - 0.2% by weight of insect flour total weight of the feed.

Yet another embodiment of the invention as defined in the appended claims is a use of the feed additive according to the invention to prevent development of harmful bacteria, particularly *Enterobacteriaceae* in poultry digestive system. Preferably, the poultry is selected from broiler chickens, laying hens, turkeys, guinea fowls, quails, partridges, pheasants and other representatives of the order *Galliformes* and ducks and geese, and other representatives of the order *Anseriformes.*

The addition of the feed additive according to the invention in this use is in amounts of 0.05 - 0.2%, preferably 0.1 - 0.2% by weight of insect flour per total weight of the feed.

It should be noted that whenever the present specification mentions "insect flour" the term encompasses powdered form from one species or multiple species of insects in the form of mixtures thereof.

### BRIEF DESCRIPTION OF FIGURES

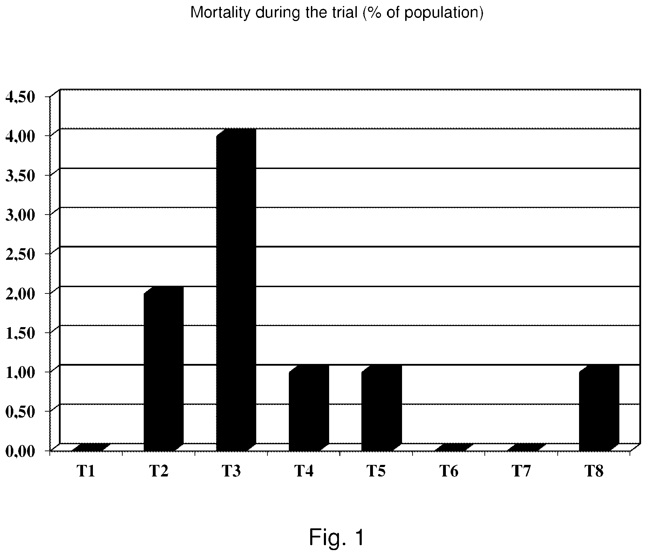

Fig. 1 shows a graph illustrating mortality of broiler chickens in trial 1 [%]; SEM=0.470; P=0.409. The lack of a,b marks in columns represents no statistically significant differences at level P<0.05.

### EXAMPLES

### Example 1.

### Use of insect flour in feeding poultry - model trials on broiler chickens

### Materials and methods - model animal: broiler chicken

The aim of the nutrition trials with broiler chickens was to assess the potential impact of feed additive in form of insect full-fat flour of the LT type, i.e. prepared from selected insect species (Turkestan cockroach *Shellfordella lateralis,* hermetia larvae *Hermetia illucens,* short-winged cricket *Gryllodes sigillatus,* brown cricket *Gryllus assimilis*) prepared in low temperatures in loose and granular complete feedstuffs on the results of rearing broiler chickens. The flour was prepared by cooling the insects to 4°C, followed by drying in 45-55°C with water content below 10% and milling to granulation of 1.0 mm and passed through a sieve with an opening of 1.0 mm. The ready flour was stored at 4°C. The test was performed on 1600 Ross 308 genotype roosters from a standard size hatching (∼20,000) with healthy one day-old roosters (Ross 308) selected therefrom, which were randomly divided into two separate feeding tests: the first formed 8 groups of ten replicates of 10 subjects, in the second 10 groups in 8 replicates. The experimental birds were kept in boxes evenly distributed along two watering lines in the production house. Besides birds in experimental boxes, some 9000 unsexed broiler chickens were fattened in the hall to ensure the conditions were as close as possible to those of a standard production cycle.

In the first experiment, broiler chickens kept in boxes received one of eight loose complete feeds - without the tested products and without (T1 - negative control), or with feed addition of a ionophore coccidiostat ie. Salinomycin (T2 - control); without coccidiostat and with addition of 0.5 kg (T3), 1.0 kg (T4), 2.0 kg (T5) of Turkestan cockroach; without coccidiostat and with addition of 0.5 kg (T6), 1.0 kg (T7), 2.0 kg (T8) of hermetia. The experiment lasted 42 days in a randomized setup with univariate analysis of variance. The measurements were performed only on birds kept in boxes. In the first experiment, the chickens and experimental feeds were weighted on day 10, 21 and 41 of the test, and in the second, on day 8 and 35 of rearing.

In the second, 35-day experiment, broiler chickens raised in boxes were fed with one of 10 granulated complete mixes - without the tested products and without (T1 - negative control) or with feed addition of a ionophore coccidiostat i.e. salinomycin (T2 - control); without coccidiostatic and with addition of 1.0 kg (T3), 2.0 kg (T4) of short-winged cricket; 1.0 kg (T5), 2.0 kg (T6) of Turkestan cockroach; without coccidiostat and with addition of 1.0 kg (T7), 2.0 kg (T8) of brown cricket (imago), without coccidiostat and with addition of 1.0 kg (T9), 2.0 kg (T10) brown cricket (subimago). In the second experiment, the chickens and experimental feeds were weighted on day 8 and 35.

The individual groups are described in Tables 1 and 2 (for the first and second trial, respectively).

| ***Table 1. Experimental groups in trial 1*** | |
|---|---|
| **Group** | **Diet** |
| **T1** | Negative control (**KN**)- feed mix with no coccidiostat, no feed enzymes, without the tested products |
| **T2** | Positive control (**KP**) - feed mix with coccidiostat, with no feed enzymes, without the tested products |
| **T3** | **KN (T1)** (no coccidiostat, no enzymes) + **Turkestan cockroach 0.5 kg/t feed** |
| **T4** | **KN (T1)** (no coccidiostat, no enzymes) + **Turkestan cockroach 1.0 kg/t feed** |
| **T5** | **KN (T1)** (no coccidiostat, no enzymes) + **Turkestan cockroach 2.0 kg/t feed** |
| **T6** | **KN (T1)** (no coccidiostat, no enzymes) + **hermetia 0.5 kg/t feed** |
| **T7** | **KN (T1)** (no coccidiostat, no enzymes) + **hermetia 1.0 kg/t feed** |
| **T8** | **KN (T1)** (no coccidiostat, no enzymes) + **hermetia 2.0 kg/t feed** |

| ***Table 2. Experimental groups in trial 2*** | |
|---|---|
| **Group** | **Diet** |
| **T1** | Negative control **(KN)**- feed mix with no coccidiostat, no feed enzymes, without the tested products |
| **T2** | Positive control **(KP)** - feed mix with Salinomycine (70 ppm), with no feed enzymes, without the tested products |
| **T3** | **KN (T1)** (no coccidiostat, no enzymes) + **short-winged cricket 1.0 kg/t feed** |
| **T4** | **KN (T1)** (no coccidiostat, no enzymes) + **short-winged cricket 2.0 kg/t feed** |
| **T5** | **KN (T1)** (no coccidiostat, no enzymes) + **Turkestan cockroach 1.0 kg/t feed** |
| **T6** | **KN (T1)** (no coccidiostat, no enzymes) + **Turkestan cockroach 2.0 kg/t feed** |
| **T7** | **KN (T1)** (no coccidiostat, no enzymes) + **brown cricket imago 1.0 kg/t feed** |
| **T8** | **KN (T1)** (no coccidiostat, no enzymes) + **brown cricket imago 2.0 kg/t feed** |
| **T9** | **KN (T1)** (no coccidiostat, no enzymes) + **brown cricket subimago 1.0 kg/t feed** |
| **T10** | **KN (T1)** (no coccidiostat, no enzymes) + **brown cricket subimago 2.0 kg/t feed** |

### Experimental feed mixes

All experimental diets were balanced by the inventors and were complete feedstuffs for broiler chickens, divided into three periods of feeding. In the first period, lasting for the first 10 days of age a Starter mix (broiler 1) was used, in the second period from day 11 to day 21 a Grower mix (broiler 2) and from day 22 to day 35/41 a Finisher mix (Broiler 3) was used. Throughout the duration of the experiment, the birds had unrestricted access to feed and water (*ad libitum*). All feed mixtures were in loose form. The experimental feeds were balanced according to the *"provocative diet"* concept, i.e. raw materials (rye, fish meal) were utilized, leading to dysbiosis and predisposing the birds to necrotic enteritis syndrome. The purpose of the sub-optimal diets was to increase growth of a disadvantageous bacterial flora including *Clostridium perfringens* and thus to validate the employed insect flour under nutritional stress conditions, which often occurs in industrial environments. The composition and nutritional value of the mixes are shown in Table 3.

| ***Table 3. Composition and nutritional value of experimental mixes administered in trials 1 and 2*** | | | | |
|---|---|---|---|---|
| | | **Broiler 1 Starter** | **Broiler 2 Grower** | **Broiler 3 Finisher** |
| **Components** | **measuring units** | **days 1-10** | **days 11-21** | **days 22-35/41** |
| Wheat | % | 22.61 | 33.06 | 15.00 |
| Corn | % | 20.17 | 11.18 | 31.07 |
| Rye | % | 15.00 | 15.00 | 15.00 |
| Post-extraction soybean meal | % | 22.47 | 15.02 | 18.32 |
| Post-extraction rapeseed meal | % | 10.00 | 15.00 | 10.00 |
| Fish meal | % | 1.50 | 1.92 | 2.00 |
| Lard | % | 4.95 | 6.50 | 6.50 |
| Mineral-vitamin premix | % | 0.30 | 0.30 | 0.30 |
| 2-Ca Phosphate | % | 1.71 | 1.05 | 0.78 |
| Chalk | % | 0.33 | 0.23 | 0.34 |
| Salt (NaCl) | % | 0.13 | 0.14 | 0.11 |
| Sodium carbonate | % | 0.17 | 0.12 | 0.15 |
| L-Lysine HCl | % | 0.32 | 0.29 | 0.22 |
| Alimet (methionine) | % | 0.30 | 0.20 | 0.22 |
| L-Threonine | % | 0.07 | 0.01 | 0.01 |

| **Nutritional value** | | | | |
|---|---|---|---|---|
| Total protein | % | 20.8 | 19.8 | 19.0 |
| Fat | % | 6.89 | 8.30 | 8.71 |
| Fiber | % | 3.34 | 3.70 | 3.25 |
| Sodium | % | 0.15 | 0.14 | 0.14 |
| Calcium | % | 0.85 | 0.70 | 0.65 |
| Total phosphorus | % | 0.78 | 0.69 | 0.61 |
| Lysine | % | 1.29 | 1.18 | 1.12 |
| Methionine | % | 0.59 | 0.50 | 0.50 |
| Methionine + cystine | % | 0.95 | 0.87 | 0.84 |
| Threonine | % | 0.84 | 0.74 | 0.72 |
| AMEn | kcal/kg | 3000 | 3100 | 3175 |

All mixes have been made without the addition of any growth promoters and feed enzymes. All feed mixtures for the group T2 contained a coccidiostat - salinomycin (60 ppm). The made feeds have been packed and marked with the name of the mixture (Broiler 1, Broiler 2, Broiler 3) and the group number (T1-T8 / T1-T10). The prepared feeds were stored in a cool, dry place.

### Measurements and observations

Measurements and observations were made only for birds kept in boxes. Chickens and feed were weighed on day 10, 20 and 41 in experiment 1 and on day 8 and 35 of rearing in experiment 2. Increases in body weight, intake and feed conversion rate were calculated for each box, at the end of each nutrition period. Mortality and weight of dead birds were recorded twice a day.
The collected data were subjected to one-way analysis of variance using the GLM procedure, and the significance of differences were examined with Duncan's test with the SAS package.

The results of analyzes are shown in Tables 4 and 5 (for the experiments 1 and 2, respectively). Data for mortality of chickens are shown in Fig. 1. As can be seen in Table 4, the addition of insect flour had positive effect on weight gain of chickens. In experiment 2, a particularly pronounced effect of the addition of Turkestan cockroaches was demonstrated. This clearly indicates a significant effect of the addition of insect flour on weight gain of chickens. Considering the proportion of the additive to the total weight of the feed, the observed effect is not the result of supplementing the feed with an additional source of protein, but of the influence of substances contained in the insect flour on digestive tract of birds. The greater increase in body weight may be due to more efficient absorption of nutrients from the feed, due to favorable changes in the composition of the intestinal microflora, and to a change in pH.

**Table 4. The results of rearing broiler chickens - average weight gain, intake, feed conversion and EWW, trial 1.**

| Group | BWG, g | | | | FI, g | | | | FCR, g | | | | EWW |
|---|---|---|---|---|---|---|---|---|---|---|---|---|---|
| | 1-10d | 10-21d | 21-41d | 1-41d | 1-10d | 10-21d | 21-41d | 1-41d | 1-10d | 10-21d | 21-41 d | 1-41d | |
| T1 | 181 | 561^{a} | 2002^{ab} | 2743^{a} | 239 | 828 | 3452 | 4519 | 1.32 | 1.48 | 1.72 | 1,65³ | 417 |
| T2 | 177 | 552^{a} | 2038^{bc} | 2765^{a} | 251 | 827 | 3485 | 4564 | 1.43 | 1.50 | 1.71 | 1.65^{a} | 411 |
| T3 | 178 | 560^{a} | 2029^{abc} | 2766^{a} | 244 | 831 | 3484 | 4560 | 1.37 | 1.48 | 1.72 | 1,65^{a} | 403 |
| T4 | 184 | 564^{a} | 2031^{abc} | 2778^{ab} | 252 | 848 | 3517 | 4617 | 1.37 | 1.50 | 1.73 | 1.66^{ab} | 415 |
| T5 | 189 | 588^{b} | 2065^{c} | 2840^{b} | 257 | 867 | 3545 | 4669 | 1.36 | 1.47 | 1.72 | 1.64^{a} | 428 |
| T6 | 186 | 555^{a} | 1990^{ab} | 2729^{a} | 252 | 840 | 3466 | 4558 | 1.36 | 1.51 | 1.74 | 1.67^{ab} | 409 |
| T7 | 186 | 551^{a} | 1977^{a} | 2712^{a} | 249 | 839 | 3467 | 4555 | 1.35 | 1.52 | 1.75 | 1.68^{b} | 405 |
| T8 | 186 | 557^{a} | 2007^{abc} | 2748^{a} | 254 | 831 | 3474 | 4558 | 1.37 | 1.49 | 1.73 | 1.66^{ab} | 411 |
| *SEM* | *1.193* | *2.905* | *6.953* | *8.813* | *1.556* | *3.930* | *10.027* | *13.553* | *0.008* | *0.005* | *0.004* | *0.003* | *2.402* |
| *P* | *0.126* | *0.031* | *0.032* | *0.012* | *0.097* | *0.176* | *0.329* | *0.173* | *0.126* | *0.072* | *0.155* | *0.044* | *0.225* |

| | | | | | | | | | | | | | |
|---|---|---|---|---|---|---|---|---|---|---|---|---|---|
| ^{a,b} ...values in rows marked with different letters differ significantly P <0.05 BWG - Body Weight Gain FI - Feed Intake FCR - Feed Conversion Rate EWW - (European Production Efficiency Factor) = [average body weight gain (g)/(FCR^{∗}10)j x [100 - mortality (%)] | | | | | | | | | | | | | |

**Table 5 The results of rearing broiler chickens fed with full fat LT insect flour, trial 2**

| | **BWG** | | | **FI** | | | **FCR** | | |
|---|---|---|---|---|---|---|---|---|---|
| **Group (1 kg)** | **1-8d** | **8-35d** | **1-35d** | **1-8d** | **8-35d** | **1-35d** | **1-8d** | **8-35d** | **1-35d** |
| Negative control | 154.67 | 1883.47^{ab} | 2038.13^{ab} | 203.43 | 3009.47 | 3212.90 | 1.32 | 1.60^{ab} | 1.58 |
| Positive control | 155.02 | 1981.15^{a} | 2136.17^{a} | 204.21 | 3002.53 | 3206.74 | 1.33 | 1.52^{b} | 1.51 |
| *Gryllodes sigillatus* | 156.52 | 1884.51^{ab} | 2041.03^{ab} | 207.71 | 2966.11 | 3173.83 | 1.33 | 1.58^{ab} | 1.56 |
| *Shelfordella lateralis* | 153.81 | 1996.42^{a} | 2150.22^{a} | 211.50 | 3092.12 | 3303.62 | 1.38 | 1.56^{b} | 1.54 |
| *Gryllus assimilis* imago | 156.31 | 1918.08^{ab} | 2074.38^{ab} | 203.14 | 3070.58 | 3273.73 | 1.31 | 1.60^{ab} | 1.58 |
| *Gryllus assimilis* subimago | 157.17 | 1788.61^{b} | 1945.77^{b} | 203.43 | 2980.17 | 3183.60 | 1.30 | 1.67^{B} | 1.64 |
| *P* | *0.9931* | *0.0397* | *0.0516* | *0.8900* | *0.2459* | *0.2831* | *0.8892* | *0.0501* | *0.0565* |

### Example 2

### Chemical analysis of the contents of the digestive system and gastrointestinal microbiome study of broiler chickens fed with insects flour.

On day 37 (18-09-14) from 10 randomly selected individuals from each experimental group were taken samples of chyme (crop, small intestine, caecum) and tibia. The collected samples of biological material were immediately frozen and secured for subsequent chemical and microbiological analyses.

The microbiome of the digestive system of animals was determined using *in situ* hybridisation of individual bacterial cells (FISH) - thawed chyme samples were vacuum filtered (Vaccum Vacuport KNF-Neuberg, Germany) through 25 mm polycarbonate filters with an inner diameter of 0.22µm (Frisenette K02BP02500). After filtration, the preparations were dehydrated in an alcohol gradient (50% -80% -96% for 3 minutes). Bacterial DNA associated with the filters was hybridized using selective oligonucleotide probes. Analyses were carried out for the following groups of bacteria: *Clostridium coccoides, Enterobacteriaceae, Clostridium leptum, Clostridium perfringens, Streptococcus* / *Lactococcus, Bifidobacterium sp., Bacteroides, Staphylococcus sp., Salmonella sp., Akkermansia muciniphila, Campylobacter sp.* Prior to hybridization with DNA probes specific to *Lactobacillus* sp. and *Enterococcus* sp., samples were sonicated and digested by the use of Enzyme mix (250 µl Tris, 200 µl of EDTA; 5.85 ml of a 1M solution of sucrose, 50 µl of 1M CaCl2; 2 ml lysozyme (L6876 40 000 units/mg, SIGMA), 200 µl of lipase (L3126, 100-400 units/mg, Type II, SIGMA), 1.15 mL H₂O). Preparations were placed in sealed polypropylene containers (Eppendorf 2207654, Germany) on cellulose filters (Whatmann 1822025, UK) with the addition of 1µl to each probe. Hybridization was done on filters for 18 h in a water bath at a constant temperature of 55°C. After incubation, filters were rinsed in sterile water, dried at room temperature and fixed on microscope slides with the Vectashield antyfading factor (Vector Laboratories H-1000, Vector USA). The visualization of preparations was done using a fluorescent microscope (Axio Imager M2, Carl Zeiss). In addition, immediately after slaughter, additionally pH value of the various sections of the gastrointestinal tract was determined with a pH-meter equipped with a glass reference electrode (EIMetron Poland).

The collected data were subjected to one-way analysis of variance using the GLM procedure, and the significance of differences was examined with the Duncan's test with the SAS package. The results of the chyme pH analysis are shown in Table 6.

**Table 6 pH value of chyme from digestive tract of broiler chickens, trial 2**

| **Treatment (1 kg/t feed)** | **pH** | | |
|---|---|---|---|
| | **Crop** | **Small intestine** | **Caecum** |
| Negative control | 5.49^{a} | 6.25 | 6.30 |
| Positive control | 5.48^{a} | 6.54 | 6.19 |
| *Gryllodes sigillatus* | 4.91^{b} | 5.98 | 6.12 |
| *Shelfordella lateralis* | 5.15^{ab} | 6.53 | 6.89 |
| *Gryllus assimilis* imago | 5.10^{ab} | 6.61 | 6.18 |
| *Gryllus assimilis* | 4.84^{b} | 6.59 | 5.94 |
| *P* | *0.0026* | *0.1477* | *0.1202* |

pH analysis of individual sections of the digestive system (Table 6) showed a statistically significant decrease in pH value in crop chyme when using the additive of flour from a short-winged cricket and brown cricket (subimago) compared to other groups, which may indicate a prebiotic effect of the abovementioned additives, indirectly stimulating probiotic microflora, higher activity thereof through production of organic acids reducing the occurrence of potentially pathogenic bacteria and improving health of the birds.

Analysis of the microbiome however showed a bacteriostatic effect of the flour, particularly from a Turkestan cockroach in small intestine (Table 7) and caecum (Table 8), including an effect of limiting growth of bacteria of the family *Enterobacteriaceae.*

**Table 7. Bacteriostatic activity of full fat LT flour on small intestine microbiome, trial 1, number of bacteria in CFU/cm³.**

| Group | Total numer of bacteria | *Enterobacteriaceae* | *Clostridium leptum* subgroup | *Eubacterium rectale* cluster | *Lactobacillus* sp. /*Enterococcus* sp. |
|---|---|---|---|---|---|
| Negative control | 9.10^{d} | 8.43^{a} | 8.26^{c} | 8.18^{d} | 8.45^{d} |
| Positive control | 9.37^{a} | 8.39^{b} | 8.56^{a} | 8.42^{a} | 8.60^{b} |
| Turkestan cockroach 0,5 kg/t feed | 9.30^{c} | 8.31^{d} | 8.31^{b} | 8.44^{a} | 8.58^{c} |
| Turkestan cockroach 1,0 kg/t feed | 9.35^{b} | 8.29^{d} | 8.30^{b} | 8.30^{b} | 8.57^{c} |
| Turkestan cockroach 2,0 kg/t feed | 9.36^{b} | 8.33^{b} | 8.21^{d} | 8.26^{c} | 8.63^{a} |
| P-value | <.0001 | <.0001 | <.0001 | <.0001 | <.0001 |

**Table 8. Bacteriostatic activity of full fat LT flour on caecum microbiome, trial 1, number ofbacteria in CFU/cm³.**

| Group | Total numer of bacteria | *Enterobacteriaceae* | *Clostridium leptum* subgroup | *Eubacterium rectale* cluster | *Lactobacillus* sp. /*Enterococcus* sp. |
|---|---|---|---|---|---|
| Negative control | 9.10^{d} | 8.43^{a} | 8.26^{c} | 8.18^{d} | 8.45^{d} |
| Positive control | 9.37^{a} | 8.39^{b} | 8.56^{a} | 8.42^{a} | 8.60^{b} |
| Turkestan cockroach 0,5 kg/t feed | 9.30^{c} | 8.31^{d} | 8.31^{b} | 8.44^{a} | 8.58^{c} |
| Turkestan cockroach 1,0 kg/t feed | 9.35^{b} | 8.29^{d} | 8.30^{b} | 8.30^{b} | 8.57^{c} |
| Turkestan cockroach 2,0 kg/t feed | 9.36^{b} | 8.33^{c} | 8.21^{d} | 8.26^{c} | 8.63^{a} |
| P-value | <.0001 | <.0001 | <.0001 | <.0001 | <.0001 |

Results of histomorphological analysis are shown in Table 9 (duodendum) and Table 10 (small intestine).

**Table 9. Histomorphology of duodendum of broiler chickens fed with feeds supplemented with flour from different species of insects**

| Duodendum | | | | | |
|---|---|---|---|---|---|
| Group | Height of villi (micrometers) | Depth of crypts (micrometers) | Thickness of mucosa (micrometers) | Thickness of muscular layer (micrometers) | Intraepithelial lymphocytes (number per square cm) |
| Negative control | 1917.40^{b} | 212.85 | 2129.66^{b} | 201.73^{a} | 251.2 |
| Positive control | 1816.22^{bc} | 200.76 | 2029.66^{b} | 175.30^{b} | 154.8 |
| Short-winged cricket | 1763.21^{c} | 195.53 | 1965.46^{c} | 203.61 ^{a} | 185.6 |
| Turkestan cockroach | 1720.36^{c} | 218.67 | 1952.64^{c} | 206.71^{a} | 127.4 |
| Brown cricket imago | 2062.31^{a} | 220.98 | 2301.17^{a} | 191.20^{ab} | 170.4 |
| Brown cricket subimago | 1754.54^{c} | 197.81 | 1952.64^{c} | 178.57^{b} | 131.2 |
| *P-value* | *<0.0001* | *0.1598* | *<0.0001* | *0.0108* | *0.158* |

**Table 10. Histomorphology of small intestine of broiler chickens fed with feeds supplemented with flour from different species of insects (all values in micrometers).**

| Small intestine | | | | | |
|---|---|---|---|---|---|
| Group | Height of villi (micrometers) | Depth of crypts (micrometers) | Thickness of mucosa (micrometers) | Thickness of muscular layer (micrometers) | Intraepithelial lymphocytes (number per square cm) |
| Negative control | 765.74^{c} | 127.67^{bc} | 899.99^{c} | 142.42^{b} | 109 |
| Positive control | 949.22^{b} | 148.22^{ab} | 1097.41 ^{b} | 177.65^{a} | 112 |
| Short-winged cricket | 804.71^{c} | 125.13^{bc} | 930.30^{c} | 142.09^{b} | 279.8 |
| Turkestan cockroach | 1134.69³ | 128.20^{bc} | 1266.76³ | 168.37^{a} | 83.6 |
| Brown cricket imago | 958.27^{b} | 165.04^{a} | 1097.41 ^{b} | 165.14^{a} | 124.4 |
| Brown cricket subimago | 952.69^{b} | 116.58c | 1090.08^{b} | 147.29^{a} | 119.6 |
| *P-value* | *<0.0001* | *0.0056* | *<0.0001* | *<0.0001* | *0.388* |

In the case of both, duodenum (Table 9) and small intestine (Table 10), there were statistically significant changes in histological structure, i.e. villi height, crypt depth, thickness of mucosa and muscle layer. There were no statistically significant changes in lymphocyte counts, however large numerical changes were found. In the duodenum similar to the case when an ionophore coccidiostat i.e. salinomycin was used (positive control - T2) the addition of a short-winged cricket; Turkestan cockroach and brown cricket subimago reduced the length of intestinal villi. The thickness of the mucous membrane was highest for the brown cricket imago and negative control while the thickness of the muscle membrane was the lowest after using salinomycin. In the small intestine the addition of the total insect flour resulted in increased length of the intestinal villi. Similar results were demonstrated for the mucosal thickness, although in the case of the short-winged cricket additive no differences compared to negative control were demonstrated. Also, the muscle membrane thickness was the lowest in the case of the short-winged cricket and negative control (T1). When analyzing described changes in the histological structure of the digestive system of broiler chickens it must be noted that even a small addition to feeds (from about 1 kg/t feed) of flour from the abovementioned insects in a form of a feed additive results in a significant modification of a number of indicators in a similar or related manner to an ionophore antibiotic i.e. salinomycin. The differences in activity in two different sections of the gastrointestinal tract, i.e. the duodenum and small intestine seem significant. The least favorable changes are observed in the case of short-winged crickets, and the best for the feed additive of Turkestan cockroach, which coincides with the results of rearing and analysis of selected groups of intestinal microflora. Although in case of the amount of intraepithelial lymphocytes in the duodenum no statistically significant change was observed, the number thereof after the addition of insect flour is on average 50% lower than in the negative control group, indicating an improvement in the integrity of this section of the digestive tract and a reduction in the negative impact of the potentially pathogenic microflora.

### CONCLUSIONS

The experiments conducted by the Inventors have shown that insect flour can be a valuable additive in feeding poultry, including broiler chickens, laying hens, turkeys, guinea fowls, quails, partridges, pheasants and other representatives of the order *Galliformes* and ducks and geese, and other representatives of the order *Anseriformes,* especially in broiler chickens feeding as a model representative of poultry. Inclusion of insect flour, particularly from Turkestan cockroach *Shelfordella lateralis* in an amount of from 0.05 to 0.2 % by weight promotes chicken growth, while simultaneously reducing the number of bacteria of the family *Enterobacteriaceae.* This effect is present, although less pronounced in the case of utilizing flour from other insect species. The observed growth effects in large-scale production can have a significant impact on the increase in breeding efficiency and raising its economic efficiency. It was further found that the addition of insect flour causes beneficial morphological changes in small intestine and duodendum indicating an alleviation of digestive system inflammations.

### Bibliography

Hossain, S.M. and Blair, R. 2007 Chitin utilisation by broilers and its effect on body composition and blood metabolites. British Poultry Science.48:33-38.
Food and Agriculture Organization of the United Nations 2012 Assessing the potential of insects as food and feed in assuring food security. Summary report. Technical consultation meeting 23-25 January, FAO, Rome, Italy.
Makkar H.P.S., Tran G., Heuze V., Ankers P. (2014) State-of-the-art on use of insects as animal feed. Animal Feed Science and Technology, 197, 1-33.
Zuidhof, M.J., Molnar, C.L., Morley, F.M., Wray, T.L., Robinson, F.E., Khan, B.A., Al-Ani, L., Goonewardene, L.A., 2003 Nutritive value of house fly (Musca domestica) larvae as a feed supplement for turkey poults. Animal Feed Science and Technology, 105, 225-230
Sánchez-Muros, M.-J., Barroso, F.G., Manzano-Agugliaro (2014) Insect meal as renewable source of food for animal feeding: a review. Journal of Cleaner Production 65:16-27.

## Claims

1. A method of preparation of a feed additive for poultry, **characterized in that** the method comprises preparation of high-fat insect flour, wherein the preparation of the high-fat insect flour consists of the following steps:
- cooling insects to 4°C,
- followed by drying in 45-55°C with water content below 10%, and
- milling to granulation of 1.0 mm, and
- passed through a sieve with an opening of 1.0 mm,
wherein the insects are selected from Turkestan cockroach *Shellfordella lateralis,* hermetia larvae *Hermetia illucens,* short-winged cricket *Gryllodes sigillatus,* brown cricket *Gryllus assimilis.*

2. A feed for poultry for use in maintaining proper condition and proper histomorphology of small intestine and duodenum of poultry, **wherein** the feed additive comprises high fat flour derived from insects and wherein the amount of the high-fat flour derived from insects is 0.05 - 0.2%, preferably 0.1 - 0.2% by weight of the total final feed, wherein insects are selected from Turkestan cockroach *Shellfordella lateralis,* short-winged cricket *Gryllodes sigillatus* and/or brown cricket *Gryllus assimilis, preferably* the insect is Turkestan cockroach *Shellfordella lateralis*

3. A feed for poultry for use in prevention of development of harmful bacteria, particularly *Enterobacteriaceae* in digestive system of poultry, **wherein** the feed additive comprises high fat flour derived from insects, and wherein the amount of the high-fat flour derived from insects is 0.05 - 0.2%, preferably 0.1 - 0.2% by weight of the total final feed, wherein insects are selected from Turkestan cockroach *Shellfordella lateralis,* short-winged cricket *Gryllodes sigillatus* and/or brown cricket *Gryllus assimilis, preferably* the insect is Turkestan cockroach *Shellfordella lateralis.*

4. The feed for use according to any one of claims 2-3, **wherein** the poultry is selected from broiler chickens, laying hens, turkeys, guinea fowls, quails, partridges, pheasants and other representatives of the order *Galliformes* and ducks and geese, and other representatives of the order *Anseriformes.*

5. A non-therapeutic method of supporting weight gain of poultry by feeding poultry with a feed, **characterized in that** to a total weight of feed, 0.05 - 0.2%, preferably 0.1 - 0.2% by weight of high-fat insect flour is added, and wherein insects are selected from Turkestan cockroach *Shellfordella lateralis,* hermetia larvae *Hermetia illucens,* short-winged cricket *Gryllodes sigillatus* and/or brown cricket *Gryllus assimilis,* preferably the insect is Turkestan cockroach *Shellfordella lateralis.*

6. The method according to claim 5, wherein high-fat flour derived from insects is obtained in a method consisting of cooling insects, to 4°C followed by drying in 45-55°C with water content below 10% and milling to granulation of 1.0 mm, and passed through a sieve with an opening of 1.0 mm.

7. The method according to any one of claims 5 - 6, **characterized in that** the poultry is selected from broiler chickens, laying hens, turkeys, guinea fowls, quails, partridges, pheasants and other representatives of the order *Galliformes* and ducks and geese, and other representatives of the order *Anseriformes.*

## Patentansprüche

1. Ein Verfahren zur Herstellung eines Futtermittelzusatzes für Geflügel, **dadurch gekennzeichnet, dass** das Verfahren die Herstellung von fettreichem Insektenmehl umfasst, wobei die Herstellung des fettreichen Insektenmehls aus den folgenden Schritten besteht:
- Kühlen von Insekten auf 4 C,
- gefolgt von der Trocknung bei 45-55°C bis auf ein Wassergehalt von weniger als 10% und
- Mahlen bis zu einer Körnung von 1,0 mm und
- Sieben mit einem Sieb mit einer Maschenweite von 1,0 mm,
wobei die Insekten aus der Turkestan-Schabe *Shellfordella lateralis,* der Hermetien-Larven *Hermetia illucens,* der Kurzflügelgrille *Gryllodes sigillatus,* der braunen Grille *Gryllus assimilis* ausgewählt sind.

2. Ein Futtermittel für Geflügel zur Verwendung bei der Aufrechterhaltung eines ordnungsgemäßen Zustands und einer ordnungsgemäßen Histomorphologie des Dünndarms und des Zwölffingerdarms von Geflügel, **wobei** der Futtermittelzusatz fettreiches Mehl umfasst, das von Insekten stammt, und wobei die Menge des fettreichen Mehls, das von Insekten stammt, 0,05 - 0,2%, vorzugsweise 0,1 - 0,2 Gew.-% des gesamten Endfutters beträgt, wobei die Insekten aus der Turkestan-Schabe *Shellfordella lateralis,* der Kurzflügelgrille *Gryllodes sigillatus* und/oder der braunen Grille *Gryllus assimilis* ausgewählt sind, wobei das Insekt vorzugsweise die Turkestan-Schabe *Shellfordella lateralis* ist.

3. Ein Futtermittel für Geflügel zur Verhinderung der Entwicklung von schädlichen Bakterien, insbesondere Enterobacteriaceae im Verdauungssystem von Geflügel, **wobei** der Futtermittelzusatz fettreiches Mehl umfasst, das von Insekten stammt, und wobei die Menge des fettreichen Mehls, das von Insekten stammt, 0,05 - 0,2%, vorzugsweise 0,1 - 0,2 Gew.-% des gesamten Endfutters beträgt, wobei die Insekten aus der Turkestan-Schabe *Shellfordella lateralis,* der Kurzflügelgrille *Gryllodes sigillatus* und/oder der braunen Grille *Gryllus assimilis* ausgewählt sind, wobei das Insekt vorzugsweise die Turkestan-Schabe *Shellfordella lateralis* ist.

4. Das Futter zur Verwendung nach einem der Ansprüche 2-3, **wobei** das Geflügel aus Masthühnern, Legehennen, Puten, Perlhühnern, Wachteln, Rebhühnern, Fasanen und anderen Vertretern der Ordnung *Galliformes* und Enten und Gänsen sowie anderen Vertretern der Ordnung *Anseriformes* ausgewählt wird.

5. Ein nicht therapeutisches Verfahren zur Unterstützung der Gewichtszunahme von Geflügel durch die Fütterung von Geflügel mit einem Futtermittel, **dadurch gekennzeichnet, dass** zu einem Gesamtgewicht des Futters 0,05 - 0,2 Gew.-%, vorzugsweise 0,1 - 0,2 Gew.-% fettreiches Insektenmehl hinzugefügt wird und wobei die Insekten aus der Turkestan-Schabe *Shellfordella lateralis,* der Kurzflügelgrille *Gryllodes sigillatus* und/oder der braunen Grille *Gryllus assimilis* ausgewählt sind, wobei das Insekt vorzugsweise die Turkestan-Schabe *Shellfordella lateralis* ist.

6. Das Verfahren nach Anspruch 5, **wobei** fettreiches Mehl, das von Insekten stammt, in einem Verfahren erhalten wird, das darin besteht, dass Insekten auf 4°C abgekühlt, anschließend bei 45-55°C bis auf ein Wassergehalt von weniger als 10% getrocknet und bis zu einer Granulation von 1,0 mm gemahlen und durch ein Sieb mit einer Maschenweite von 1,0 mm gesiebt werden.

7. Das Verfahren nach einem der Ansprüche 5-6, **dadurch gekennzeichnet, dass** das Geflügel aus Masthühnern, Legehennen, Puten, Perlhühnern, Wachteln, Rebhühnern, Fasanen und anderen Vertretern der Ordnung *Galliformes* und Enten und Gänsen sowie anderen Vertretern der Ordnung *Anseriformes* ausgewählt wird.

## Revendications

1. Une méthode de préparation d'un additif alimentaire pour volaille, **caractérisée en ce que** la méthode comprend la préparation de farine d'insectes riche en matières grasses, dans laquelle la préparation de la farine d'insectes riche en matières grasses comprend les étapes suivantes :
- refroidissement des insectes jusqu'à 4°C,
- suivi d'un séchage à 45-55°C avec une teneur en eau inférieure à 10% et
- broyage à une granulation de 1,0 mm, et
- passage à travers un tamis d'une ouverture de 1,0 mm,
où les insectes sont choisis parmi le Cafard du Turkestan *Shellfordella lateralis,* larves d'Hermetia *Hermetia illucens,* le grillon à ailes courtes *Gryllodes sigillatus,* le grillon brun *Gryllus assimilis.*

2. Un aliment pour volaille à utiliser pour maintenir un bon état et une bonne histomorphologie de l'intestin grêle et du duodénum de volaille, **où** l'additif alimentaire comprend de la farine riche en matières grasses dérivée d'insectes et où la quantité de farine riche en matières grasses dérivée d'insectes est de 0,05 à 0,2%, de préférence de 0,1 à 0,2% en poids de l'aliment final total, où les insectes sont choisis parmi le Cafard du Turkestan *Shellfordella lateralis,* le grillon à ailes courtes *Gryllodes sigillatus* et/ou le grillon brun *Gryllus assimilis,* de préférence l'insecte est le cafard du Turkestan *Shellfordella lateralis.*

3. Un aliment pour volaille à utiliser pour prévenir le développement de bactéries nuisibles, en particulier *Enterobacteriaceae* dans le système digestif de la volaille,**où** l'additif alimentaire comprend de la farine riche en matières grasses dérivée d'insectes et où la quantité de farine riche en matières grasses dérivée d'insectes est de 0,05 à 0,2%, de préférence de 0,1 à 0,2% en poids de l'aliment final total, où les insectes sont choisis parmi le Cafard du Turkestan *Shellfordella* lateralis, le grillon à ailes courtes *Gryllodes sigillatus* et/ou le grillon brun *Gryllus* assimilis, de préférence l'insecte est le cafard du Turkestan *Shellfordella lateralis.*

4. L'aliment à utiliser selon l'une quelconque des revendications 2 à 3, où la volaille est choisie parmi les poulets de chair, les poules pondeuses, les dindes, les pintades, les cailles, les perdrix, les faisans et autres représentants de l'ordre des *Galliformes* et des canards et oies, et autres des représentants de l'ordre des *Ansériformes.*

5. Une méthode non-thérapeutique pour soutenir le gain de poids de volaille en alimentant de la volaille avec un aliment, **caractérisée en ce que** pour un poids total d'aliment, 0,05 - 0,2%, de préférence 0,1 - 0,2% en poids de la farine d'insectes riche en matières grasses est ajouté, et où les insectes sont choisis parmi le Cafard du Turkestan *Shellfordella lateralis,* larves d'Hermetia *Hermetia illucens,* le grillon à ailes courtes *Gryllodes sigillatus* et/ou le grillon brun *Gryllus assimilis,* de préférence l'insecte est le cafard du Turkestan *Shellfordella lateralis.*

6. La méthode selon la revendication 5, **où** la farine riche en matières grasses dérivée d'insectes est obtenue dans une méthode consistant à refroidir les insectes, jusqu'à 4°C, puis à sécher à 45-55°C avec une teneur en eau inférieure à 10% et à broyer jusqu'à une granulation de 1,0 mm, et à passer à travers un tamis avec une ouverture de 1,0 mm.

7. La méthode selon l'une quelconque des revendications 5 à 6, **caractérisée en ce que** la volaille est choisie parmi les poulets de chair, les poules pondeuses, les dindes, les pintades, les cailles, les perdrix, les faisans et autres représentants de l'ordre des *Galliformes* et des canards et oies, et autres des représentants de l'ordre des *Ansériformes.*
